Europäisches Patentamt

European Patent Office

Office européen des brevets

(19)

(11) Veröffentlichungsnummer: **0 342 267 B1**

# (12) EUROPÄISCHE PATENTSCHRIFT

(45) Veröffentlichungstag der Patentschrift: **22.01.92**

(51) Int. Cl.⁵: **G01B 5/00**

(21) Anmeldenummer: **88115813.3**

(22) Anmeldetag: **26.09.88**

Teilanmeldung 91110737.3 eingereicht am 26/09/88.

(54) **Koordinatenmessgerät.**

(30) Priorität: **20.05.88 PCT/EP88/00450**

(43) Veröffentlichungstag der Anmeldung:
**23.11.89 Patentblatt 89/47**

(45) Bekanntmachung des Hinweises auf die
Patenterteilung:
**22.01.92 Patentblatt 92/04**

(84) Benannte Vertragsstaaten:
**CH DE FR GB IT LI SE**

(56) Entgegenhaltungen:
**EP-A- 0 027 060      EP-A- 0 100 716**
**EP-A- 0 157 176      EP-A- 0 216 041**
**GB-A- 18 297         GB-A- 2 173 311**

**PATENT ABSTRACTS OF JAPAN, Band 10,
Nr. 157 (P-464)[2213], 6. Juni 1986; & JP-A-61
11 607 (FUJIOKA SEIKOU K.K.) 20-01-1986**

**"Fertigungsmesstechnik", Handbuch für Ind.
und Wissens. Warnecke/Dutschke, Springer
1984, Seiten 271-285**

(73) Patentinhaber: **Firma Carl Zeiss**

**W-7920 Heidenheim (Brenz)(DE)**

(84) Benannte Vertragsstaaten:
**CH DE FR IT LI SE**

Patentinhaber: **CARL ZEISS-STIFTUNG HAN-
DELND ALS CARL ZEISS**

**W-7920 Heidenheim (Brenz)(DE)**

(84) Benannte Vertragsstaaten:
**GB**

(72) Erfinder: **Herzog, Klaus
Kopernikusstrasse 42
W-7082 Oberkochen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Ermittlung der Koordinatenwerte eines Tastelementes sowie ein auf der Basis dieses Verfahrens arbeitendes Koordinatenmeßgerät.

Mehrkoordinatenmeßgeräte gibt es in den verschiedensten Ausführungsformen. Eine Übersicht über die unterschiedlichen Bauformen gibt der Artikel von M. Dietsch und H. Lang in Feinwerktechnik und Meßtechnik 86 (1978) Seite 262-269. Allen darin beschriebenen Geräten liegt im Prinzip der gleiche Aufbau zugrunde: Die Geräte bestehen aus drei senkrecht zueinander angeordneten und aufeinander aufbauenden Führungen, Längs derer der Tastkopf verschiebbar ist, sowie drei den Führungen zugeordneten Linearmaßstäben.

Da die erste Führung jeweils das Gewicht der darauf aufbauenden, weiteren Führungen tragen muß, ist zur Erreichung einer ausreichend hohen Meßgenauigkeit eine stabile Ausbildung für die Führungen erforderlich, die Deformationen während des Meßvorganges verhindert. Koordinatenmeßgeräte sind deshalb teure und aufwendige Präzisionsinstrumente.

Es sind auch Koordinatenmeßgeräte bekannt, die nicht in einem kartesischen Koordinatensystem, sondern in Kugel- oder Zylinderkoordinaten messen. So ist z.B. in der GB-PS 14 98 009 ein Koordinatenmeßgerät beschrieben, bei dem der Tastkopf mittels dreier hintereinander angeordneter Gelenke beweglich gehalten ist. Die Lage des Tastkopfes wird bei diesem Gerät mit Hilfe von in den Gelenken angeordneten Winkelgebern festgestellt. Ein ähnlich aufgebautes Koordinatenmeßgerät ist aus der US-PS 42 40 205 bekannt. Bei diesem Gerät ist der Tastkopf an einer vertikal verschiebbaren Pinole befestigt, die ihrerseits über drei Gelenke mit vertikal angeordneter Drehachse in einer Ebene geführt ist. Die Lage der Pinole in der Ebene wird mit Hilfe eines Maßstabes und eines Drehgebers gemessen.

Auch bei diesen beiden letztgenannten Geräten, die statt Linearführungen Drehachsen zur Führung des Tastkopfes verwenden, stützen sich die beweglichen Teile der Geräte aufeinander ab. Es werden deshalb Gegengewichte benötigt, mit denen die beweglichen Maschinenteile ausbalanciert werden müssen, was das Gewicht und die Masse der bewegten Maschinenteile vergrößert. Außerdem ist es erforderlich, die Lagerungen für die Drehachsen sehr stabil auszuführen, da sie jeweils das Gewicht der darauf aufbauenden Teile tragen müssen.

Dennoch ist es nicht möglich, mit diesen Geräten ausreichend genaue Messungen durchzuführen, da die einzelnen Teile des Gelenkarmes während der Messungen wechselnden Lastverhältnissen ausgesetzt sind und sich deshalb unkontrolliert deformieren.

Desweiteren sind sogenannte Höhenmeßgeräte bekannt. Sie bestehen aus einem in einer Ebene manuell frei verschiebbaren Träger, an dem ein Längenmeßtaster vertikal verschiebbar geführt ist. Mit dem der Führung zugeordneten Maßstab lassen sich allein die Höhen des Tasters über der Ebene an verschiedenen Stellen über der Ebene messen und in Relation bringen. Die Lage des Höhenmeßgerätes in dieser Ebene wird nicht erfaßt. Zudem ist der Tastkopf eines Höhenmeßgerätes wenn überhaupt dann nur entlang der Vertikalen auslenkbar.

Diese bekannten Höhenmeßgeräte sind also keine Mehrkoordinatenmeßgeräte, da sie nur zur Messung in einer einzigen Dimension geeignet sind. Zwar ist auch schon ein Höhenmeßgerät bekannt geworden, das über eine Kulissenführung in zwei Koordinaten geführt ist und dessen Lagekoordinaten in der Ebene durch den Kulissenführungen zugeordnete Maßstäbe ermittelt wird. Dieses Gerät entspricht jedoch wieder dem eingangs genannten, prinzipiellen Aufbau bekannter Mehrkoordinatenmeßgeräte und besitzt deshalb u.a. den Nachteil, daß Rechtwinkligkeitsfehler der Führungen direkt in das Meßergebnis eingehen. Außerdem läßt sich dieses bekannte Gerät nicht drehen, so daß zusätzlich ein Drehtisch für das zu vermessende Werkstück benötigt wird.

Aus der DE-OS 32 05 362 sowie der DE-OS 36 29 689 sind Koordinatenmeßgeräte auf der Basis eines von Hand bzw. von einem Roboter über das zu vermessende Werkstück geführten Tastelementes bekannt, welches aus verschiedenen Richtungen mit Hilfe von Laser-Entfernungsmessern angemessen wird. Diese Geräte besitzen jedoch den Nachteil, daß die winkelmäßige Ausrichtung des Tastelementes nur unter hohem Aufwand und selbst dann nicht in jeder Lage im Meßraum bestimmt werden kann. Außerdem kann mit dem Tastelement das zu vermessende Werkstück nicht ohne weiteres umfahren werden, da dann zumindest einige der Meßstrahlen unterbrochen würden.

Aus der EP A2 0 216 041 ist ein Koordinatenmeßgerät auf der Basis eines in einer Ebene frei verschiebbaren Höhenmeßgerätes bekannt. Die Lage des Höhenmeßgerätes in der Ebene wird dort mit Hilfe zweier Sensoren im Fuß des Gerätes ermittelt, die ein in der Grundplatte, auf der das Höhenmeßgerät verschiebbar ist, eingelassenes Kreuzgitter abtasten. Die Herstellung einer solchen Grundplatte in der für Koordinatenmeßgeräte erforderlichen Größe und erforderlichen Genauigkeit ist sehr aufwendig.

In der GB-A-2 173 311 ist eine Digitalisier-Einrichtung beschrieben, mit der die Lage eines Punktes in einer Ebene durch zwei Auszüge variabler Länge bestimmt sind, die nach Art eines Dreiecks an zwei festen Punkten drehbar angelenkt sind. Inwieweit diese Einrichtung zum Aufbau eines dreidimensional messenden und frei verschieblichen Koordinatenmeßgerätes benutzt werden kann, dafür gibt die genannte Schrift keinen Hinweis.

Es ist die Aufgabe der vorliegenden Erfindung, ein Verfahren zur Ermittlung der Koordinatenwerte eines Tastelementes anzugeben, das es erlaubt, mit möglichst geringem Aufwand eine Vielzahl verschiedener Meßaufgaben mit ausreichend hoher Genauigkeit in allen Raumrichtungen durchzuführen, sowie ein zur Durchführung des Verfahrens geeignetes Koordinatenmeßgerät zu schaffen.

Diese Aufgabe wird durch die im Kennzeichen der Ansprüche 1 bzw. 7 angegebenen Merkmale gelöst.

Die erfindungsgemäße Lösung besitzt mehrere Vorteile: Der Träger des Tastkopfes stützt sich auf einer ebenen Führungsplatte ab und kann dort frei manuell oder motorisch verschoben werden. Es ist deshalb möglich, die Lage dieses Trägers in der Ebene mit einem Gelenkarm und diesem zugeordneten Meßsystemen festzustellen, der keinerlei Gewicht zu tragen hat. Der Gelenkarm wird einfach an einem Ende an der Führungsplatte und am anderen Ende am Träger angelenkt und kann sich auch beispielsweise selbst über zusätzliche Luftlager auf der Führungsplatte abstützen. Es sind daher keine großdimensionierten Drehachsen oder Gegengewichte erforderlich, so daß die ganze Anordnung eine geringe Masse besitzt und leicht bewegt werden kann. Da der Gelenkarm selbst keine Lasten zu tragen hat, treten keine Verbiegungen im Gelenkarm auf, was der Meßengauigkeit des Gerätes zugute kommt. Außerdem sind Rechtwinkligkeitsfehler bei der Ermittlung der Ebenenkoordinaten vermieden, da keine aufeinander aufbauenden Führungen verwendet werden. Das Gerät ist zudem in der Ebene drehbar, so daß eine Vielzahl von Meßaufgaben auch ohne Drehtisch für das Werkstück gelöst werden können. Der erfindungsgemäße Aufbau ermöglicht es, Koordinatenmeßgeräte in kompakter und vereinfachter Bauform bei gleichzeitig guter Zugänglichkeit des Meßraums zu schaffen.

Der bzw. die Gelenkarme, mit denen der Träger an der Führungsplatte befestigt ist, kann auf unterschiedlicher Art und Weise ausgeführt werden. So ist es beispielsweise möglich, einen aus drei Drehachsen aufgebauten Gelenkarm oder einen aus zwei Drehachsen und einem Auszug variabler Länge aufgebauten Gelenkarm zu verwenden oder sogar zwei Gelenkarme vorzusehen. Die Lage des Trägers in der Ebene läßt sich ohne weiteres durch den Drehachsen zugeordnete Winkelgeber bzw. den Auszügen variabler Länge zugeordnete Maßstäbe ermitteln. Hierbei erfolgt die Berechnung der genauen Koordinatenwerte aus den Signalen der Meßwertgeber durch einen daran angeschlossenen elektronischen Rechner.

Besonders vorteilhaft kann es sein, wenn der oder die Gelenkarme am oberen Ende des Trägers angelenkt sind, wo sie nicht mit den auf der ebenen Führungsplatte aufgebauten Werkstücken kollidieren können. Der Träger kann dann um 360˚ frei um das Werkstück herumgeführt werden, so daß ein separater Drehtisch für das Werkstück entbehrlich ist.

Von besonderem Vorteil ist hierbei, wenn der Abstand zwischen der vertikalen Drehachse, an der die Gelenkarme angelenkt sind, und der Tastkugel möglichst gering ist. Denn je kleiner dieser Abstand ist, desto ungenauer kann das zur Messung dieses Drehwinkels verwendete Winkelmeßsystem sein bzw. wird dann keine besonders hohe Auflösung für den Winkelgeber gefordert.

Um diese Bedingung geometrisch einhalten zu können, besitzt der Träger zweckmäßig eine etwa C-förmige Gestalt, indem eine schlanke Säule auf einer im Querschnitt großflächigeren Grundplatte aufbaut. Am oberen Ende besitzt die Säule einen in Richtung des Taststifts vorstehenden Arm. An diesem ist das Drehgelenk angeordnet ist, über das die Gelenkarme an das Höhenmeßgerät angebunden sind.

Außerdem ist dann der Werkstücktisch zweckmäßig mit einem mittig angeordneten, schlanken Fuß versehen, derart, daß der Träger mit seiner Grundplatte unter die Tischfläche und damit nahe an das Werkstück heranfahren kann. Diese Form des Werkstücktisches bietet außerdem weitere Vorteile. Denn der schlanke Fuß des Tisches kann als Bezugspunkt für den Gelenkarm dienen. Wenn dieser um den Fuß drehbar am Werkstück angelenkt ist, läßt sich der Träger ebenfalls um 360˚ frei um das Werkstück herumführen.

Zur Erreichung möglichst hoher Meßgenauigkeiten muß sichergestellt werden, daß keine Meßfehler infolge Verkippungen des Trägers um die vertikale Achse entstehen. Diese können kompensiert werden, indem entweder Meßsysteme in der Grundplatte des Trägers angeordnet werden, die den Abstand zur Führungsplatte messen, oder direkt die Neigung messende elektronische Waagen am Träger angebracht werden.

Wenn man mit Sensoren arbeitet, die den Abstand zur Oberfläche der ebenen Führungsplatte messen, dann geht deren Genauigkeit bzw. die Abweichung ihrer Topographie von einer idealen Ebene in das Meßergebnis ein. Um diesen Einfluß zu eliminieren ist es zweckmäßig, die Topographie der ebenen Führungsplatte in einem separaten Korrekturlauf vorab zu ermitteln und als zweidimensionale Korrekturmatrix abzuspeichern.

Das auf der Basis des erfindungsgemäßen Verfahrens arbeitende Koordinatenmeßgerät kann sowohl handgeführt betrieben werden als auch mit einem Antrieb versehen werden, der den Träger in der Ebene verschiebt. Ein derartiger Antrieb sollte vorzugsweise im Schwerpunkt des Trägers an diesem angreifen. Dies ermöglicht hohe Verfahrgeschwindigkeiten und Beschleunigungen. Da ein solcher Antrieb eventuell jedoch die freie Drehbarkeit des Trägers um 360˚ behindern kann, ist dann das Werkstück auf einem Drehtisch anzuordnen, damit die freie Zugänglichkeit von allen Richtungen aus gewährleistet ist, oder es wird mit zwei gleichartig aufgebauten Geräten beiderseits des festmontierten Werkstückes gemessen.

Weitere Vorteile der Erfindung ergeben sich aus der nachstehenden Beschreibung von Ausführungsbeispielen anhand der Figuren 1-10 der beigefügten Zeichnungen.

Figur 1     ist eine perspektivische Prinzipskizze der mechanischen Teile des erfindungsgemäßen Koordinatenmeßgerätes nach einem ersten Ausführungsbeispiel;

Figur 2     ist eine Prinzipskizze eines zweiten, bezüglich des Gelenkarmes abgewandelten Ausführungsbeispiels der Erfindung;

Figur 3     ist eine Prinzipskizze eines dritten Ausführungsbeispiels der Erfindung mit zwei Gelenkarmen;

Figur 4     ist die Prinzipskizze eines vierten Ausführungsbeispiels der Erfindung;

Figur 5     ist die perspektivische Prinzipskizze eines fünften, bevorzugten Ausführungsbeispiels der Erfindung;

Figur 6     zeigt die Unterseite eines Teils des Lenkers (113) aus Figur 5;

Figur 7     zeigt einen der Lenker (113) aus Figur 5 in der Seitenansicht;

Figur 8a     ist eine detailliertere Darstellung eines in Verbindung mit dem Gerät nach Figur 5 bzw. 6 alternativ verwendbaren interferometrischen Gelenkarmes in einer vertikalen Ebene;

Figur 8b     zeigt den Gelenkarm aus Figur 8 in Aufsicht;

Figur 9a     ist eine vereinfachte Prinzipskizze, die den Gerätetyp nach Figur 5-8 in Aufsicht zeigt;

Figur 9b     ist eine vereinfachte Prinzipskizze, die den Gerätetyp nach Figur 5-8 in Seitenansicht zeigt;

Figur 10     ist eine perspektivische Prinzipskizze eines motorisierten Ausführungsbeispiels der Erfindung;

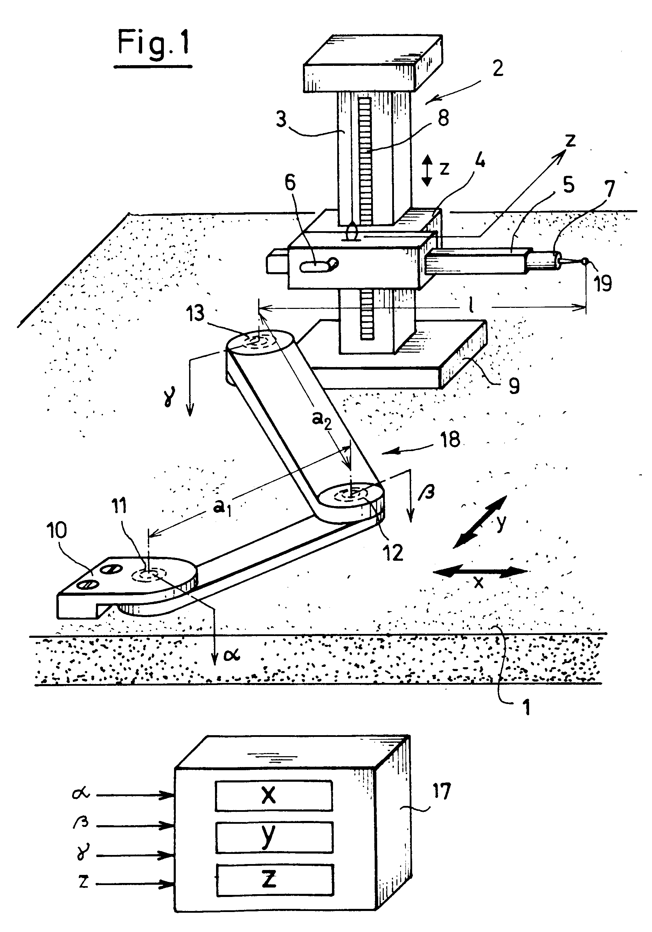

Das in Figur 1 dargestellte Koordinatenmeßgerät baut im wesentlichen auf einem Höhenmeßgerät (2) bekannter Bauart auf, das auf einer ebenen Granitplatte (1) verschiebbar ist. Ein solches Höhenmeßgerät besteht aus einer vertikalen Säule (3), entlang der ein Schlitten (4) in der Höhe, d.h. in Z-Richtung verschiebbar ist. Zur Messung der Z-Position trägt die Säule (3) einen Maßstab (8), der von einem in der Darstellung nicht sichtbaren photoelektrischen Gebersystem im Schlitten (4) abgetastet wird. Im Schlitten (4) ist ein Arm (5) waagerecht verschiebbar gelagert. Der Arm (5) trägt an seinem Ende einen Taster (7) und kann mittels einer Klemmeinrichtung im Schlitten (4) über den mit (6) bezeichneten Hebel festgeklemmt werden.

Das Gewicht von Schlitten (4), Meßarm (5) und Tastkopf (7) ist über ein in der Säule (3) geführtes Gegengewicht ausbalanciert.

Damit das Höhenmeßgerät (2) reibungsfrei verschoben werden kann, stützt es sich über in der Basis (9) der Säule (3) integrierte Luftlager auf der Granitplatte (1) ab.

Allerdings ist der Tastkopf (7) kein eindimensionaler Längenmeßtaster, sondern vielmehr ein in allen drei Richtungen ansprechender 3D-Tastkopf z.B. des in der US-PS 41 77 568 beschriebenen Typs.

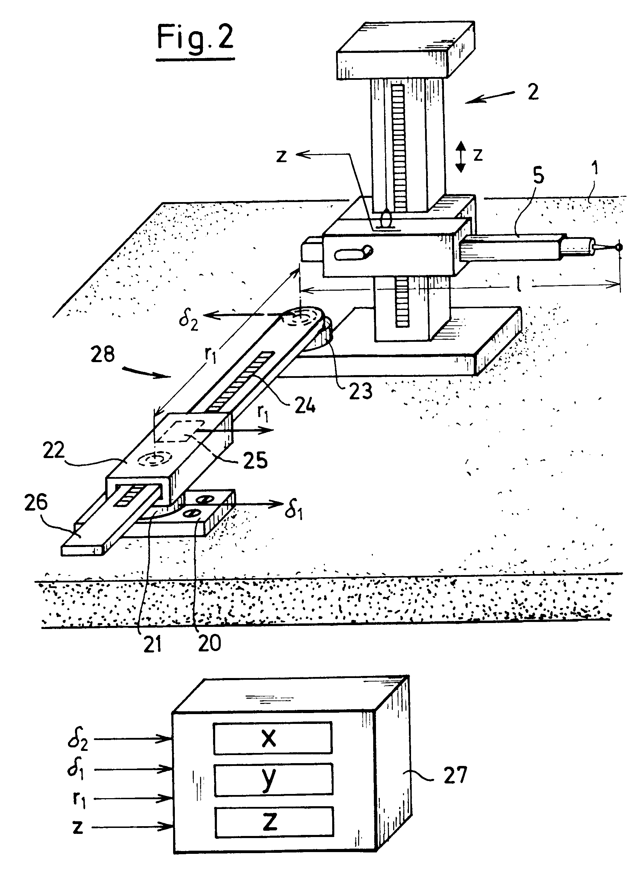

Das hier anhand von Figur 1 beschriebene Höhenmeßgerät ist bei gleichem Aufbau auch Bestandteil der Ausführungsbeispiele nach Figur 2-4.

Wie bereits eingangs ausgeführt erfassen Höhenmeßgeräte allein die Höhen (Z) der vom Tastkopf (7) angetasteten Meßpunkte. Damit auch die Koordinatenwerte (X und Y) in der Ebene in der Granitplatte (1) meßtechnisch erfaßt werden, ist die Basis (9) des Höhenmeßgerätes (2) über einen Gelenkarm (18) mit der feststehenden Granitplatte (1) verbunden.

Der Gelenkarm (18) besteht aus zwei Teilen, wobei der erste Teil mittels eines ersten Drehgebers (11) gegenüber einer an die Granitplatte (1) angeschraubten Halteplatte (10) drehbar gelagert ist, der zweite Teil mittels eines zweiten Drehgelenks (12) am ersten Teil befestigt ist und zusätzlich mittels eines dritten Drehgelenks (13) an die Grundplatte (9) des Höhenmeßgerätes (2) angelenkt ist. Der Gelenkarm (18) erlaubt somit ein freies Verschieben des Höhenmeßgerätes (2) und hat keinerlei Lasten außer seinem eigenen Gewicht zu tragen. Er kann deshalb einschließlich der Lager für die Drehgelenke (11,12 und 13) kostengünstig hergestellt werden. Das Eigengewicht des Gelenkarmes (18) läßt sich außerdem durch ein unterhalb des Gelenkes (12) angebrachtes Luftlager abfangen, so daß während eines Meßvorganges es nicht zu wechselnden Lastverhältnissen in Bezug auf die Lager des Drehgelenkes kommt, d.h. die Bewegungen des Höhenmeßgerätes üben keine Kräfte auf die meßtechnisch relevanten Komponenten des Gerätes aus.

In die drei Drehgelenke (11,12 und 13) sind drei Winkelencoder eingebaut, von denen die Winkelstellungen $\alpha$, $\beta$ und $\gamma$ der verdrehten bzw. verschwenkten Teile gemessen werden. Zusammen mit den bekannten Längen $a_1$ und $a_2$ der Teile zwischen den Drehachsen der Gelenke (11 und 12) bzw (12 und 13) und der Auszuglänge (l) des Meßarmes (5) des Höhenmeßgerätes ist die Lage der Tastkugel (19) am Taststift des Tastkopfes (7) eindeutig bestimmt.

Die Drehgeber in den Gelenken (11,12 und 13) und das Gebersystem für den Maßstab (8) am Höhenmeßgerät (2) sind an einen Rechner (17) angeschlossen, der aus den gewonnenen Winkeln $\alpha$, $\beta$, $\gamma$, dem gemessenen Höhenwert (Z) und den vorab eingegebenen Parametern ($a_1$, $a_2$) und (l) die Lage der Tastkugelmitte (19) in kartesischen Koordinaten berechnet und anzeigt.

Während die Längen $a_1$ und $a_2$ des Gelenkarmes (18) unveränderlich sind und als Parameter fest im Rechner (17) abgespeichert werden können, ist die Auszuglänge (l) des Meßarmes (5) nach Lösen des Klemmhebels (6) veränderbar und läßt sich an unterschiedlichen Meßaufgaben anpassen. Es ist jedoch nicht erforderlich, die Auszuglänge (l) des Armes (5) mit einem zusätzlichen Maßstab zu ermitteln. Das aus dem Höhenmeßgerät (2) und dem Gelenkarm (18) bestehende Koordinatenmeßgerät kann vielmehr nach einem Ändern der Auszuglänge (l) und wieder erfolgter Klemmung des Armes (5) unter Benutzung einer im Meßbereich des Meßgerätes angeordneten Kalibriervorrichtung neu kalibriert werden. Hierzu werden beispielsweise die Meßpunkte der Kalibriereinrichtung mehrmals aus deutlich unterschiedlichen Stellungen des Höhenmeßgerätes (2) angetastet. Durch Gleichsetzen der Meßwerte in den verschiedenen Stellungen läßt sich dann auf die unbekannte Auszuglänge (l) rückrechnen.

Das in Figur 2 dargestellte Ausführungsbeispiel unterscheidet sich von dem nach Figur 1 in der Ausbildung des Gelenkarmes (28), mit dem das Höhenmeßgerät (2) an die Granitplatte (1) angelenkt ist. Der Gelenkarm (28) besteht aus einem Auszug (26) variabler Länge, der in einer Linearführung (22) gelagert ist. Die Führung (22) ist über ein erstes Drehgelenk (21) schwenkbar an einem an die Granitplatte angeschraubten Halteteil (20) befestigt, während der Auszug (26), der mit einem Längenmaßstab (24) versehen ist, über ein zweites Drehgelenk (23) mit der Basis des Höhenmeßgerätes (2) verbunden ist.

In der Führung (22) für den Auszug (26) befindet sich ein Gebersystem (25) zur Abtastung des Maßstabes (24). Auch hier sind die Gelenke (21) und (23) mit Winkelencodern zur Messung der Drehwinkel $\delta_1$ und $\delta_2$ zwischen Gelenkarm und Basis bzw. zwischen Basis und Höhenmeßgerät (2) versehen.

Der Rechner (27) des Gerätes berechnet die Koordinaten (X,Y und Z) der Tastkugel des Tastkopfes am Höhenmeßgerät (2) aus den Meßwerten $\delta_1$ und $\delta_2$ der Winkelgeber in den Drehgelenken (21 und 23), der gemessenen Auszuglänge $r_1$ des Gelenkarmes (28) und der durch einen Kalibriervorgang ermittelten Länge (l) des Meßarmes (5) am Höhenmeßgerät (2).

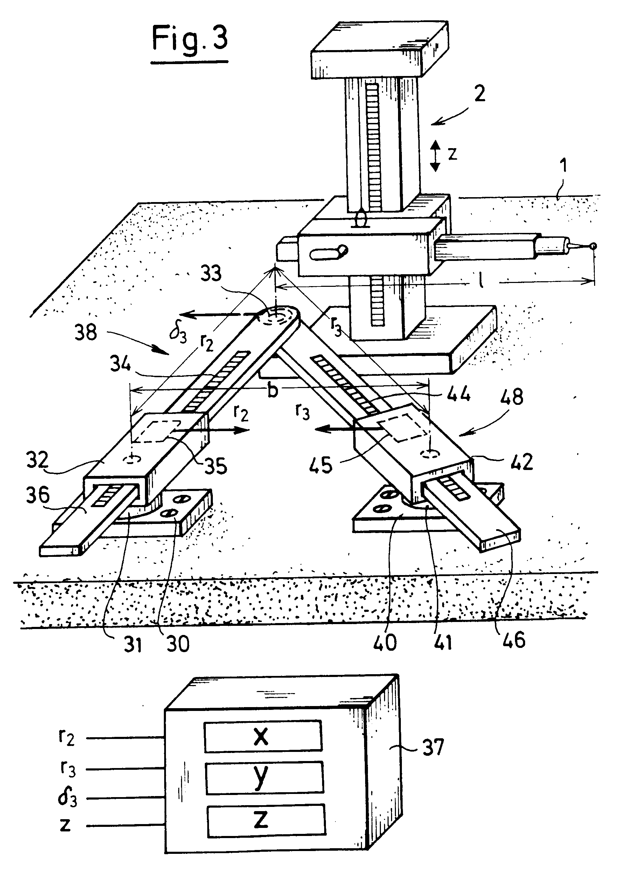

Im Ausführungsbeispiel nach Figur 3 ist ein Koordinatenmeßgerät dargestellt, welches mittels zweier Gelenkarme (38 und 48) des anhand von Figur 2 beschriebenen Typs die Position in der Ebene der Granitplatte bestimmt. Dazu trägt der über ein erstes Drehgelenk (31) mit dem Halteteil (30) und der Granitplatte schwenkbar verbundene Auszug (36) des ersten Gelenkarmes (38) einen ersten Längenmaßstab (34) und der ebenfalls über ein zweites Drehgelenk (41) gegenüber dem zweiten Halteteil (40) schwenkbare Auszug (46) des zweiten Gelenkarmes (48) einen gleichartigen Längenmaßstab (44). Beide Maßstäbe werden von entsprechenden Gebern (35 und 45) in den Linearführungen (32 und 42) der Gelenkarme (38 und 48) abgetastet und liefern die Meßwerte ($r_2$) und ($r_3$) für die Auszuglängen der beiden Gelenkarme. Beide Gelenkarme sind an einem Ende unter einem festen Abstand b zueinander an der Granitplatte befestigt und mit einem doppelten Gelenk (33) mit gemeinsamer Drehachse an der Basis des Höhenmeßgerätes (2) angelenkt. Allein dem Gelenk (33) ist ein Winkelencoder zugeordnet, der den Drehwinkel des Höhenmeßgerätes (2) relativ zu einem der beiden Auszüge (36 oder 46) mißt.

Mit Kenntnis des Basisabstandes (b) der beiden Gelenkarme und den Auszuglängen ($r_2$) und ($r_3$), die ein Dreieck mit bekannten Seitenlängen bilden, ist die Lage der Drehachse des Gelenks (33) in der Ebene der Granitplatte eindeutig bestimmt. Von diesem Punkt ausgehend läßt sich die Lage der Tastkugel mit Hilfe des Meßwertes $\delta_3$ des Winkelencoders im Drehgelenk (33) und der Auszuglänge (l) des Meßarmes des Höhenmeßgerätes (2) ermitteln. Die dazu nötigen trigonometischen Berechnungen führt der Rechner (37) durch, an den die Ausgänge der genannten Meßwertgeber angeschlossen sind.

In diesem Ausführungsbeispiel benötigen die Gelenkarme zwar mehr Platz und begrenzen den Bewegungsbereich und den nutzbaren Meßbereich des Gerätes, bieten jedoch den Vorteil einer größeren erzielbaren Genauigkeit.

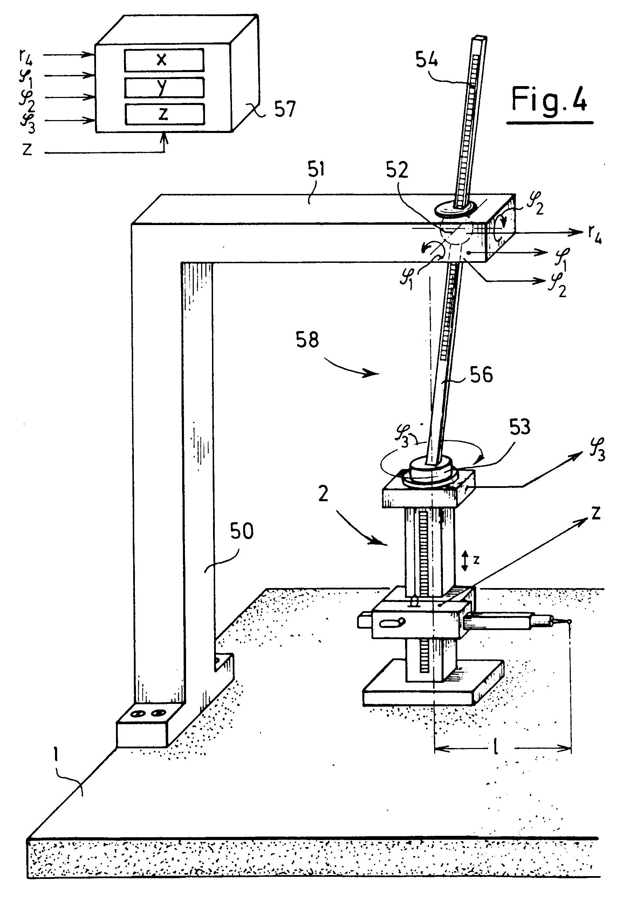

In dem in Figur 4 dargestellten Azsuführungsbeispiel ist der zur Messung der Ebenenkoordinaten (X,Y) verwendete Gelenkarm (58) am oberen Ende der Säule des Höhenmeßgerätes (2) angelenkt. Der Gelenkarm (58) besteht aus einer Stange, die mit einem Ende über ein erstes kardanisches Doppelgelenk (53) allseits beweglich am Höhenmeßgerät (2) befestigt ist. Die Stange (56) ist in einer ebenfalls kardanisch an einem zweiten Gelenk (52) gelagerten Hülse verschiebbar gelagert, die an dem über den Meßbereich hinausragenden Teil (51) eines feststehenden Trägers (50) befestigt ist. In der Hülse befindet sich das Gebersystem für den an der Stange (56) angebrachten Linearmaßstab (54).

Dem Kardangelenk (52) sind außerdem zwei Drehgeber zur Messung der Winkel $\zeta_1$ und $\zeta_2$ zugeordnet, den die Stange (56) relativ zur Basis (1) des Höhenmeßgerätes (2) einnimmt. Weiterhin ist dem Gelenk (53) an der Oberseite des Höhenmeßgerätes (2) ein Drehgeber zur Messung des Winkels $\zeta_3$ zugeordnet, um den das Höhenmeßgerät um die Vertikale gedreht werden kann.

Aus dem Längenmeßwert ($r_4$) des Maßstabes (54), den Winkeln $\zeta_1$ $\zeta_2$ und $\zeta_3$ der Winkelencoder und dem Z-Wert des Maßstabes am Höhenmeßgerät (2) rechnet der Rechner (57) des Koordinatenmeßgerätes die kartesischen Koordinaten (X,Y und Z) der Tastkugel des Gerätes. Hierbei findet eine Umwandlung der Polarkoodinaten ($r_4$, $\zeta_1$ und $\zeta_2$) in ein auf die Ebene der Granitplatte projiziertes kartesisches Koordinatensystem statt.

Infolge der Anlenkung des Gelenkarmes (58) am oberen Ende des Höhenmeßgerätes (2) ist dessen Beweglichkeit in der Ebene im Vergleich zu den dargestellten übrigen Ausführungsbeispielen am geringsten gestört.

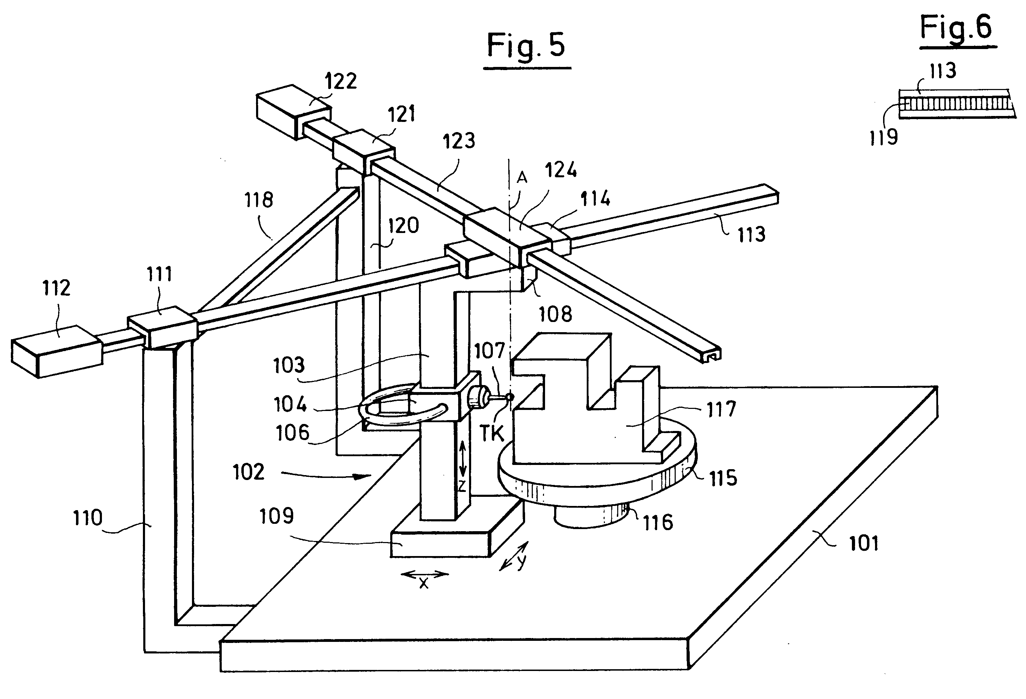

Ein weiteres Ausführungsbeispiel der Erfindung, bei dem ebenfalls die Gelenkarme am oberen Ende des Höhenmeßgerätes angelenkt sind, ist in Figur 5 dargestellt. In diesem Ausführungsbeispiel besitzt das Höhenmeßgerät (102) im Vertikalschnitt eine etwa C-förmige Gestalt, wobei den unteren Schenkel des C eine Basisplatte (109) bildet, auf der ein vertikaler Träger (103) aufbaut. An diesem Träger (103) ist ein Schlitten (104) für den Tastkopf (107) vertikal verschiebbar gelagert. Der Schlitten (104) ist mit einem Bügel (106) versehen, mit dessen Hilfe das Gerät (102) auf einer ebenen Granitplatte (101) verschoben werden kann und der Tastkopf (107) in der Höhe verstellt werden kann.

Das Oberteil (108) des Trägers (103) springt in Richtung auf die Taststiftspitze vor und bildet den oberen Schenkel des C. An diesem vorwärts ausragenden Teil (108) sind die Lenker mit den Maßstäben zur Messung der Position des Höhenmeßgeräts in der Ebene (X,Y) drehbar angelenkt, wobei mit (A) die Drehachse bezeichnet ist. Die Lage der Drehachse ist hierbei so gewählt, daß sie durch den Mittelpunkt der Tastkugel ($T_k$) am Tastkopf (107) geht bzw. nur einen geringen Abstand davon besitzt.

An der Rückseite der Granitplatte (101) sind zwei Säulen (110) und (120) fest angebracht. Sie tragen beide an ihrer Oberseite ein Drehlager, über das die dort mit Haltern (111) und (121) befestigten Lenker (113) und (123) ähnlich wie im Ausführungsbeispiel nach Figur 3 drehbar gehalten sind. Die Lenker (113) und (123) tragen wie aus der Figur 6 hervorgeht an ihrer Unterseite eine Maßstabsteilung (119). Sie sind in dem am oberen Ende um die Achse (A) am Höhenmeßgerät drehbaren Führungsgehäusen (114) und (124) linear verschiebbar gelagert und stehen dort über die Vorderseite des Höhenmeßgerätes (102) vor. Natürlich ist es auch möglich, die Lenker so anzubringen, daß sie nach hinten, über die Säulen (110) und (120) hinaus vorstehen.

Bei geringeren Anforderungen an die Meßgenauigkeit läßt sich ein Vorstehen der Lenker überhaupt vermeiden, wenn anstelle der starren Lenker Meßbänder verwendet werden, die über eine Umlenkrolle in das Innere der Säulen (110,120) geführt und von einer dort angebrachten Feder unter Spannung gehalten werden.

An ihrem hinteren Ende tragen die Lenker (113,123) je ein Gegengewicht (112) bzw. (122). Mit Hilfe dieser Gegengewichte sind die Lenker (113) und (123) so ausbalanciert, daß sie kräftefrei auf der Oberseite des Trägers (103) aufliegen. Hierdurch sind wechselnde Lastverhältnisse vermieden, die andernfalls auftreten würden, wenn sich der Abstand zwischen dem Höhenmeßgerät (102) und den Säulen (110) bzw. (120) ändert.

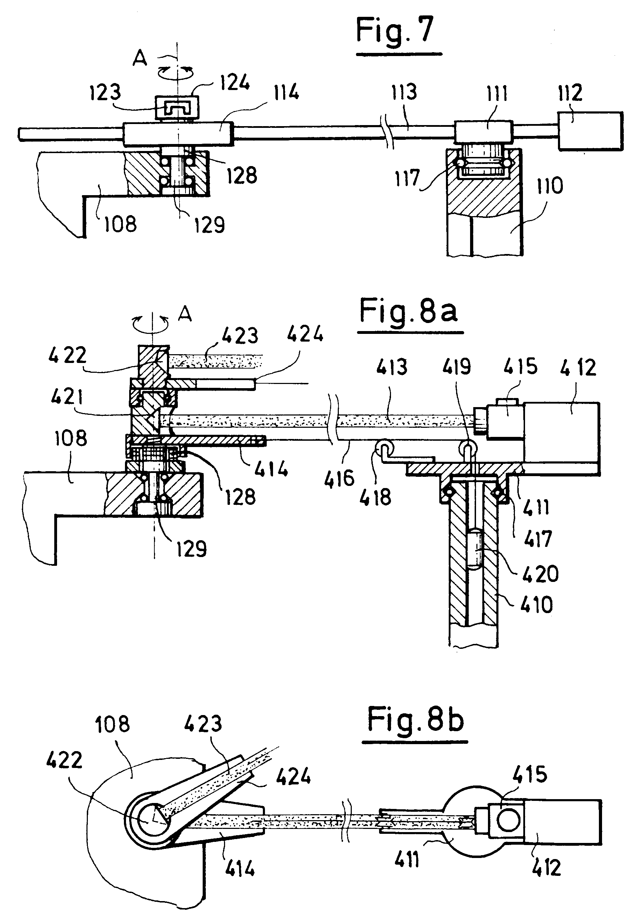

Die Art und Weise, in der die Säule (110) und das Höhenmeßgerät (102) durch den Lenker (113) verbunden sind, ist in Figur 7 nochmals deutlicher dargestellt. Im Teilschnitt erkennt man hier das Drehlager (117) an der Oberseite der Säule (110) sowie das Drehlager (129) im Oberteil (108) des Höhenmeßgerätes. Diesem letzteren Lager (129) ist ein Winkelencoder (128) zugeordnet, der die Drehlage des Höhenmeßgerätes (102) relativ zur Ausrichtung des Lenkers (113) mißt. Die Gehäuse (114) und (124), in denen die Lenker (113) und (123) längs geführt sind, enthalten außerdem ein photoelektrisches inkrementales Gebersystem, von dem die Maßstabsteilung (119) in Figur 6) der in den Lenkern (113) und (123) enthaltenen Linearmaßstäbe abgetastet wird.

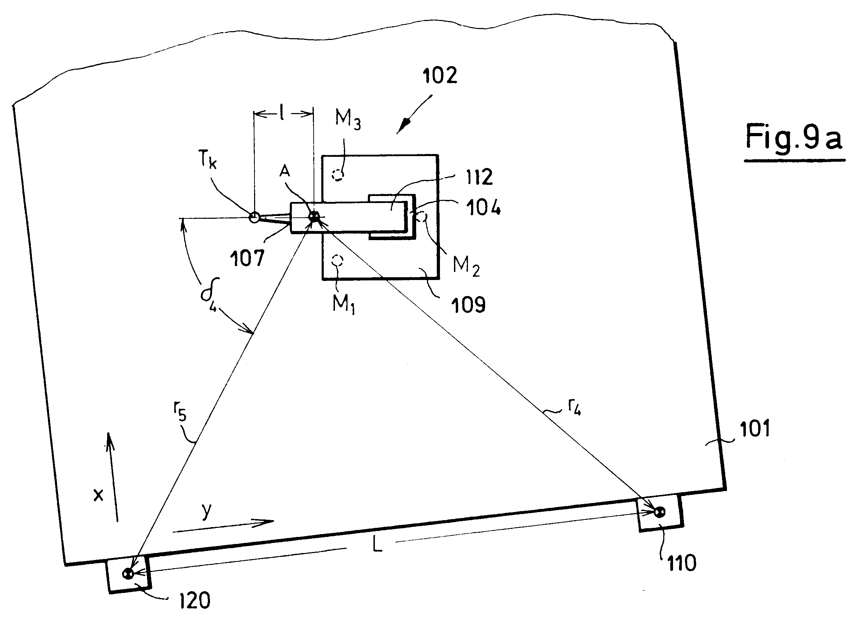

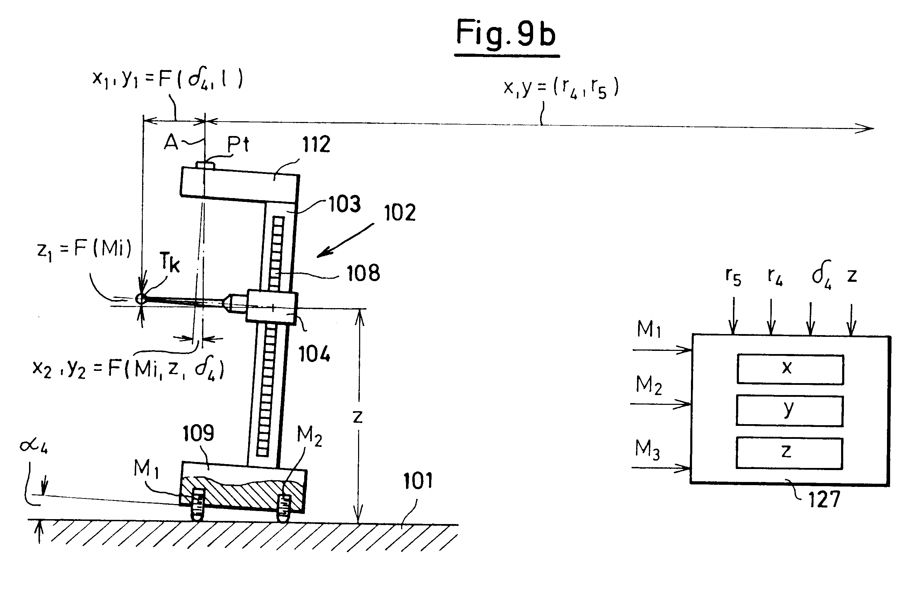

An ihrem oberen Ende sind die beiden Säulen (110) und (120) durch einen Stab (118) mit geringem thermischen Ausdehnungskoeffizienten wie z.B. Invar miteinander verbunden. Diese Maßnahme spielt eine besondere Rolle, da der Abstand der beiden Säulen bzw. der davon getragenen Drehpunkte, wie noch anhand von Figur 9a und 9b beschrieben werden wird, die Basis für die Messung der ebenen Koordinaten des Höhenmeßgerätes (102) bildet. Wenn zusätzlich sichergestellt ist, daß die Linearmaßstäbe ebenfalls aus Material mit geringem thermischen Ausdehnungskoeffizienten bestehen, oder die thermische Ausdehnung des Stabes und der Maßstäbe durch eine Temperaturmessung erfaßt wird, läßt sich die Lage der Drehachse (A) bzw. des Höhenmeßgerätes in der Ebene (X,Y) mit sehr hoher Genauigkeit bestimmen.

Das zu vermessende Werkstück ist in Figur 5 mit (117) bezeichnet. Es ruht auf einem Werkstücktisch, dessen Platte (115) über einen mittig angebrachten, schlanken Fuß (116) auf der Granitplatte (101) befestigt ist. Durch diese Maßnahme und in Verbindung mit der freien Drehbarkeit des Höhenmeßgerätes unter den oben angebrachten Lenkern (113) und (123) ist es möglich, mit dem Höhenmeßgerät (102) um das Werkstück (117) vollständig herumzufahren bzw. das Werkstück von allen Seiten zu vermessen.

Die angesprochene freie Drehbarkeit um 360° um das Werkstück herum läßt sich im übrigen auch bei den in Fig. 1 und Fig. 2 dargestellten Ausführungsbeispielen erzielen. Erreicht wird das, indem dort ebenfalls ein Werkstücktisch mit einem einzelnen, mittig angebrachten Fuß im Meßbereich aufgestellt wird und die mit (10) bzw. (20) bezeichneten, festen Bezugspunkte für den jeweils einzelnen Gelenkarm nicht an den Rand des Meßbereiches, sondern unter den Tisch gelegt werden, so daß der Gelenkarm um den Tischfuß herum drehbar ist. Ein Anlenken am oberen Ende des Höhenmeßgerätes erübrigt sich dann.

Mit einem Koordinatenmeßgerät des in Figur 5 beschriebenen Aufbaues können sehr viele Meßaufgaben gelöst werden, die bisher einen aufwendigen Rundtisch oder umständliche Tasterformen bzw. ein Dreh-Schwenk-Gelenk erforderten wie z.B. schräge Bohrungen in prismatischen Werkstücken oder Rotationsteile.

Die Lenker (113) und (123) mit den Linearmaßstäben im Ausführungsbeispiel nach Figur 5-7 können außerdem durch interferometrische Längenmeßsysteme ersetzt werden. Dies ist insbesondere dann vorteilhaft, wenn große Meßlängen gewünscht werden, wobei dann die Lenker unhandlich lang werden. Ein für große Meßlängen modifiziertes Ausführungsbeispiel ist in den Figuren 8a und 8b dargestellt. Danach befinden sich auf jeder der beiden Säulen am hinteren Ende der Grundplatte (101) auf einer drehbar gelagerten Platte (411) ein Lasergenerator (412) mit angesetztem Interferometerkopf (415). In der Figur 8a bzw. 8b ist die betreffende Säule mit (410) bezeichnet. Auf das Drehlager (129) am oberen Teil (108) des Höhenmeßgerätes ist eine Trägerplatte (414) montiert auf der das vom Interferometer (415) angemessene Reflektorprisma (421) befestigt ist. Ein zweites Reflektorprisma (422) ist seinerseits drehbar auf dem Träger des Prismas (421) gelagert und wird von einem zweiten, hier nicht dargestellten Interferometer auf der anderen Säule angemessen. Die Tragplatte (414) wird mit Hilfe eines Spanndrahtes (416) immer so nachgeführt, daß der Meßstrahl (413) des Interferometers senkrecht auf das Reflektorprisma (421) auftrifft. Hierzu ist der Spanndraht (416) über die beiden Rollen (418) und (419) auf der drehbaren Platte (411) geführt. Die Spannung des Drahtes stellt ein Gegengewicht (420) sicher. Dieses ist in der hohlen Säule (410) geführt. Für das zweite Prisma (422) ist eine entsprechende Einrichtung zum Nachführen vorgesehen.

Mit Hilfe der beiden interferometrischen Meßstrahlen (413) und (423) kann die Lage der Drehachse (A) in der waagerechten Ebene (X,Y) aufgrund einfacher trigonometrischer Beziehungen eindeutig bestimmt werden. Dies wird unmittelbar aus Figur 9a ersichtlich. Dort ist der Abstand zwischen den beiden Drehachsen in den Säulen (110) und (120) mit (L) bezeichnet und die von den Maßstäben bzw. Interferometersystemen gemessenen Abstände von diesen Drehachsen zur Drehachse (A) am Höhenmeßgerät sind mit $r_4$ bzw. $r_5$ bezeichnet.

Zur Durchführung von Koordinatenmessungen ist es jedoch erforderlich, die genaue Lage der Tastkugel ($T_k$) in der Ebene zu kennen. Hierzu muß außerdem die Drehlage des Höhenmeßgerätes (102) bzw. des Trägers (103) bestimmt werden. Dies geschieht durch den Winkelgeber (128) (Figur 7 bzw. 8a), der den Winkel $\delta_4$ zwischen der Taststiftachse und einem der beiden Lenker bzw. Meßstrahlen angibt. Danach ist es möglich, bei Kenntnis des Abstandes (l) zwischen Tastkugel ($T_k$) und der Drehachse (A) Tastkugelkoordinaten (X und Y) in der Ebene zu bestimmen. Der Abstand (l) ist in der Darstellung nach Figur 9a überhöht dargestellt. Es ist zweckmäßig, diesen Abstand möglichst klein zu halten, da dann für die Messung des Winkels $\delta_4$ nur ein preiswerter Geber mit geringer Auflösung benötigt wird, der keine hohe Meßgenauigkeit besitzen muß. Wenn diese Voraussetzung nicht gegeben ist und mit Hilfe der Spanndrähte (416) die Referenzlinie, gegen die der Winkelgeber (128) mißt, nicht ausreichend genau festgelegt wird, kann ein starrer Lenkerstab anstelle eines der Spanndrähte oder zusätzlich verwendet werden.

Da sich die Tastkugel ($T_k$) unterhalb der durch die Meßstrahlen $r_4$ und $r_5$ aufgespannten Ebene befindet können Meßfehler auftreten, wenn die Z-Führung für den Tastkopfträger (104) nicht stets lotrecht zu dieser Ebene ausgerichtet ist. Solche Verkippungen können beispielsweise durch dynamische Kräfte beim Bewegen des Höhenmeßgerätes hervorgerufen werden oder durch die mangelnde Ebenheit der Granitplatte (101) bedingt sein, auf der das Höhenmeßgerät (102) mittels Luftlagern gleitet. Die entsprechenden Verhältnisse sind in der Seitenansicht nach Figur 9b anschaulich dargestellt. Es ergibt sich ein von der Höhe (Z) abhängi-

ger Lagefehler der Tastkugel ($T_k$) in der Ebene (X,Y) abhängig von dem mit $\alpha_4$ bezeichneten Kippwinkel. Im dargestellten Beispiel ist der Kippwinkel ($\alpha_4$) der einfacheren Darstellung halber in der Vertikalebene eingezeichnet, in der die Taststiftachse liegt. Es ist jedoch klar, daß Verkippungen nach allen Seiten auftreten können und deshalb auch die Komponente des Kippwinkels in der Richtung senkrecht zur Zeichnungsebene berücksichtigt werden muß.

In einer zur Durchführung von hochgenauen Messungen geeigneten Ausführungsform sind wie in Figur 9a und Figur 9b dargestellt in die Grundplatte (109) des Höhenmeßgerätes (102) drei Induktiv- taster ($M_1$, $M_2$ und $M_3$) eingebaut, die den Abstand zur Oberfläche der Granitplatte (101) messen. Aus den Signalen dieser Induktivtaster läßt sich der Kippwinkel $\alpha_4$ bzw. lassen sich die Korrekturkoordinaten ($X_2$, $Y_2$) berechnen, die die Verkippung bezüglich der Lage in der Ebene (X,Y) hervorruft. Die Verkippung bewirkt außerdem einen Höhenfehler ($Z_1$), der vom Abstand zwischen dem Z-Maßstab (108) und der Tastkugel ($T_k$) abhängt. Auch dieser Korrekturwert kann mit Hilfe der Sensoren ($M_1$,$M_2$,$M_3$) ermittelt werden. Die erforderlichen Berechnungen der Korrekturdaten werden in einem Rechner (127) durchgeführt. Diesem Rechner sind neben den Meßwerten der Induktivtaster ($M_1$,$M_2$,$M_3$) die Meßwerte ($r_4$, $r_5$,$\delta_4$ und Z) zugeführt, die von den Interferometern, den Winkelgeber (128) und vom Geber des Maßstabes (108) geliefert werden. Da die beschriebene Art der Korrektur des Kippfehlers voraussetzt, daß die Oberfläche der Platte (101) eben ist, ist im Speicher des Rechner (127) außerdem eine zweidimensionale Korrekturmatrix abgespeichert, in der alle Ebenheitsabweichungen erfaßt sind. Die Erfassung der Ebenheitsabweichungen, d.h. die Topographie der Oberfläche der Platte (101) kann beispielsweise in einem einmaligen Kalibrierlauf mit Hilfe von elektronischen Neigungsmessern ermittelt werden.

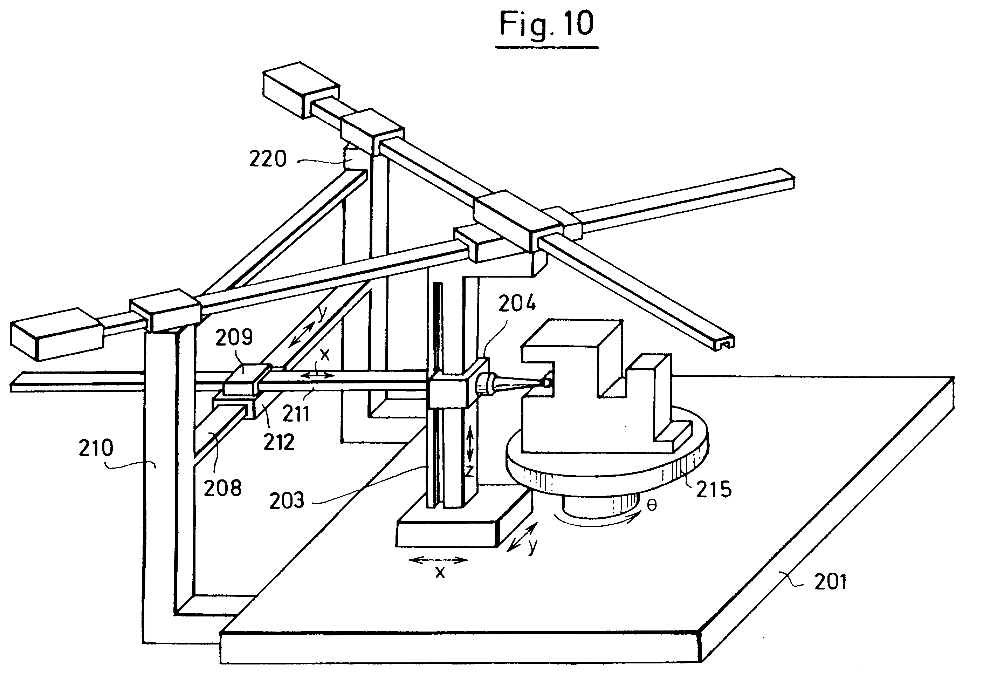

In den bisherigen Ausführungsbeispielen sind allein handbediente Koordinatenmeßgeräte gemäß der Erfindung beschrieben worden, d.h. das jeweilige Höhenmeßgerät wurde von Hand über die Granitplatte bewegt. In der Figur 10 ist eine motorisierte Version dargestellt. Das Ausführungsbeispiel nach Figur 10 entspricht im wesentlichen dem handbedienten Gerät nach Figur 5. Gleichartige Teile werden nicht nochmals beschrieben und besitzen deshalb auch kein Bezugszeichen.

An der Rückseite des Ständers (203) des motorisierten Meßgerätes nach Figur 10 greift eine Schubstange (211) an. Die Schubstange (211) wird von einem Linearantrieb bewegt, der sich in einem Gehäuse (209) auf einem Schlitten (212) befindet, der seinerseits über einen zweiten Linearantrieb entlang eines Querträgers (208) zwischen den beiden Säulen (210) und (220) verschiebbar ist. Die beiden Linearantriebe bewegen das Meßgerät in der Ebene (X,Y).

Die Schubstange (211) greift etwa in Höhe des Schwerpunktes des Höhenmeßgerätes an. Es kann deshalb schnell verfahren werden, ohne daß störende Kippmomente aufteten.

Da es aufgrund des im Ausführungsbeispiel speziell dargestellten Antriebes nicht möglich ist, von allen Seiten um das Werkstück herumzufahren, ist der Tisch (215) als Drehtisch oder als Schalttisch ausgebildet, der mehrere definierte Winkelstellungen $\Psi$ in Bezug auf die Grundplatte (201) einnehmen kann.

## Patentansprüche

1.  Verfahren zur Ermittlung der Koordinatenwerte eines Tastelementes, bei dem
    - die Lage der Drehachse (A) eines auf einer Grundplatte (101) waagerecht verschiebbaren Trägers für ein Tastelement ($T_k$)durch Längenmessung von zwei Punkten mit festem gegenseitigen Abstand (b,L) aus oder durch eine Abstands- und eine Winkelmessung bzw. mehrere Winkelmessungen von einem Punkt aus ermittelt wird, die Drehlage ($\delta_4$) des Trägers um die vertikale Achse (A) durch einen weiteren, zusätzlichen Winkelgeber ermittelt wird,
    - aus dem bekannten Abstand (1) zwischen der Drehachse (A) und dem Tastelement ($T_k$) sowie dem gemessenen Winkelwert ($\delta_4$) die ebenen Lagekoordinaten des Tastelementes ($T_k$) errechnet werden, und
    - die Höhenkoordinate (Z) des im Träger (103) vertikal verschieblichen Tastelementes ($T_k$) durch einen Maßstab (108) im Träger (103) ermittelt wird.

2.  Verfahren nach Anspruch 1, dadurch gekennzeichnet, daß die Schieflage ($\alpha_4$) des Trägers gegen die Vertikale (Z) durch Zusatzmeßeinrichtungen ermittelt wird und aus den Zusatzmeßwerten und dem gemessenen Höhenwert (Z) zweite Korrekturwerte ($X_2$,$Y_2$,$Z_1$) berechnet werden und ebenfalls mit den gemessenen Lagekoordinaten (X,Y) bzw. mit der Höhenkoordinate (Z) verknüpft werden.

3.  Verfahren nach Anspruch 2, dadurch gekennzeichnet, daß die Messung der Schieflage ($\alpha_4$) durch elektronische Neigungsmesser im Träger (103) erfolgt.

4.  Verfahren nach Anspruch 2, dadurch gekennzeichnet, daß die Messung der Schieflage ($\alpha_4$) durch mindestens drei beabstandete Sensoren ($M_1$, $M_2$, $M_3$) im Fuß (109) des Trägers (103) erfolgt, die den Abstand zur ebenen Führung des Trägers messen.

5. Verfahren nach Anspruch 4, dadurch gekennzeichnet, daß die Topographie der ebenen Führung (101) in einem separaten Meßprozeß aufgenommen und als zweidimensionale Korrekturmatrix gespeichert wird, und daß zur Ermittlung der Schieflage die Korrekturmatrix und die Meßwerte der Sensoren ($M_1$, $M_2$, $M_3$) verwendet werden.

6. Verfahren nach Anspruch 1 oder 2, dadurch gekennzeichnet, daß die ebenen Lagekoordinaten (X,Y) mit Hilfe von Laserinterferometern (415) gemessen werden.

7. Koordinatenmeßgerät auf der Basis eines in einer Ebene frei verschiebbaren Trägers (3,103,203), der einen vertikal verschiebbaren Tastkopf (7,107) und einen die vertikale Position (Z) des Tastkopf messenden Maßstab (8,108) besitzt, wobei der Tastkopf (7,107) ein Tastelement ($T_k$) an einem in mehreren Raumrichtungen ansprechenden Taststift trägt und der Träger über mindestens einen Gelenkarm mit mindestens einem feststehenden Bezugspunkt (10;20;30,40;50;110,120;210,220) verbunden ist, der Gelenkarm mehrere die Lage des Trägers in der Ebene messende Drehgeber bzw. Maßstäbe besitzt sowie einen weiteren Drehgeber, der die Drehlage des Trägers um eine vertikale Achse ($A,\gamma,\delta_2,\delta_3,\zeta_3$) mißt, und eine Einrichtung vorgesehen ist, die aus den Meßwerten des weiteren Drehgebers und dem bekannten Abstand 1 zwischen dem Tastelement und der Drehachse die Lage (X,Y) des Tastelementes ermittelt.

8. Koordinatenmeßgerät nach Anspruch 7, dadurch gekennzeichnet, daß der Gelenkarm (18) aus drei Gelenken (11,12,13) besteht und den Gelenken Drehgeber ($\alpha$, $\beta$, $\gamma$) zugeordnet sind.

9. Koordinatenmeßgerät nach Anspruch 7, dadurch gekennzeichnet, daß der Gelenkarm (28) aus zwei Gelenken (21,23) und einem Auszug (26) variabler Länge ($r_1$) besteht und den Gelenken Drehgeber ($\delta_1$, $\delta_2$) und dem Auszug ein Maßstab (24) zugeordnet sind.

10. Koordinatenmeßgerät nach Anspruch 7, dadurch gekennzeichnet, daß zwei Gelenkarme (38,48) mit jeweils zwei Gelenken (31,33;41,33) und je einem Auszug (36,46) variabler Länge

($r_2,r_3$) vorgesehen sind und jedem Auszug ein Maßstab (34,44) sowie mindestens einem Gelenk (33) ein Drehgeber ($\delta_3$) zugeordnet ist.

11. Koordinatenmeßgerät nach einem der Ansprüche 7-10, dadurch gekennzeichnet, daß der oder die Gelenkarme (58,113,123) am oberen Ende des verschiebbaren Trägers (2,102) angelenkt sind.

12. Koordinatenmeßgerät nach Anspruch 11, dadurch gekennzeichnet, daß der Träger (103) um 360° frei unter dem bzw. den Lenkern drehbar ist.

13. Koordinatenmeßgerät nach Anspruch 11, dadurch gekennzeichnet, daß die bzw. der Lenker mittels eines Drehgelenkes am Träger (103) befestigt ist, dessen vertikale Drehachse (A) durch die Tastkugel ($T_k$) des am Höhenmeßgerätes befestigten Tastkopfes geht bzw. eine geringe Entfernung (l) von der Tastkugel ($T_k$) besitzt.

14. Koordinatenmeßgerät nach Anspruch 7, dadurch gekennzeichnet, daß der Träger (103) auf einer im Querschnitt großflächigeren Grundplatte (109) steht und im Verschiebebereich des Trägers ein Werkstücktisch (115) vorgesehen ist, der auf einem mittig angeordneten schlanken Fuß (11b) ruht, derart, daß der Träger mit seiner Grundplatte (109) unter die Tischfläche (115) fahren kann.

15. Koordinatenmeßgerät nach Anspruch 14, dadurch gekennzeichnet, daß der feststehende Bezugspunkt der Fuß des Werkstücktisches ist und der Gelenkarm drehbar an diesem befestigt ist.

16. Koordinatenmeßgerät nach Anspruch 11, dadurch gekennzeichnet, daß die Gelenkarme (113,123) so ausbalanciert sind, daß sie im wesentlichen kräftefrei auf der Oberseite des Trägers (103) aufliegen.

17. Koordinatenmeßgerät nach Anspruch 16, dadurch gekennzeichnet, daß die beiden Gelenkarme (113,123) mittels zweier vertikaler Ständer (110,120) an der ebenen Führung (101) des Trägers (103) befestigt sind und die Ständer an ihren oberen Enden durch einen starren Querstab (118) mit geringem Wärmeausdehnungskoeffizienten befestigt sind.

18. Koordinatenmeßgerät nach Anspruch 17, dadurch gekennzeichnet, daß die Gelenkarme (113,123) über ihren Verbindungspunkt (A) an der Oberseite (108) des Trägers (103) hinaus vorstehen.

19. Koordinatenmeßgerät nach Anspruch 7, dadurch gekennzeichnet, daß ein erster Antrieb für die Vertikalverschiebung (z) des Tastkopfes am Träger (203) und ein zweiter Antrieb (211) für die Horizontalverschiebung des Trägers vorgesehen ist.

20. Koordinatenmeßgerät nach Anspruch 19, dadurch gekennzeichnet, daß der zweite Antrieb (211) in Höhe des Schwerpunktes des Trägers (203) an diesem angreift.

21. Koordinatenmeßgerät nach Anspruch 19, dadurch gekennzeichnet, daß der zweite Antrieb ein zwischen zwei Stützen (210,220) an einer Seite des Meßbereiches des Koordinatenmeßgerätes gesetzter Linearantrieb (212) ist, der seinerseits einen zweiten, senkrecht dazu wirkenden Linearantrieb (211) trägt und daß im Verschiebebereich des Trägers (203) ein Drehtisch (215) für das zu vermessende Werkstück angeordnet ist.

## Claims

1. A method for determining the coordinate values of a probe element by

    - determining the position of the rotational axis (A) of a carrier carrying a probe element ($T_k$) and being horizontally displaceably on a base plate (101) by means of length measurements made starting from two points of fixed distance (b, L) or by means of a length and an angle measurement, or by means of several angle measurements starting from a single point, and, determining the rotational position ($\delta_4$) of the carrier around the vertical axis (A) by means of an additional angle encoder,
    - calculating the positional coordinates of the probe element ($T_k$) in the plane from the known distance (1) between the rotational axis (A) and the probe element ($T_k$) and from the angle value ($\delta_4$) measured, and
    - determining the elevation coordinate (Z) of the probe element ($T_k$) being vertically displaceable in the carrier (103) by means of a scale (108) arranged in the carrier (103).

2. The method of claim 1, characterized by determining the tilt angle ($\alpha_4$) of the carrier with respect to the vertical coordinate axis (Z) with the aid of ancillary measuring devices and computing second correction values ($X_2$, $Y_2$, $Z_1$) from said ancillary measured values and said elevation coordinate value (Z); and, combining said second correction values ($X_2$, $Y_2$, $Z_1$) with the measured position coordinates (X, Y) and with the elevation coordinate value (Z).

3. The method of claim 2, characterized by measuring said tilt angle ($\alpha_4$) by means of an electronic inclination measuring device mounted on said carrier (103).

4. The method of claim 2, characterized by measuring said tilt angle ($\alpha_4$) by means of at least three mutually spaced sensors ($M_1$, $M_2$, $M_3$) mounted in the foot (109) of the carrier (103) for measuring the distance to the planar guide surface of said carrier.

5. The method of claim 4, characterized by determining the topography of said planar guide surface (101) in a separate measuring process and storing the same in a computer as a two-dimensional corrective matrix; and, determining said tilt angle by using said corrective matrix and the measured values of said sensors ($M_1$, $M_2$, $M_3$).

6. The method of claim 1 or 2, wherein said planar position coordinates (X, Y) are measured with the aid of laser interferometers (415).

7. A coordinate measuring apparatus based on a carrier (3, 103, 203) being freely displaceable in a plane and comprising a probe (7, 107), which is displaceable vertically and a scale (8, 108), which measures the vertical position (Z) of the probe, wherein said probe (7, 107) carrying a probe element ($T_k$) on a stylus, which is responsive to several dimensional directions, wherein said carrier is connected to at least one fixed reference point (10; 20; 30; 40; 50; 110, 120; 210, 220) by means of a linkage arm, wherein said linkage arm comprises several rotary encoders or scales for measuring the position of the carrier in said plane and comprises an additional rotary encoder for measuring the rotational position of the carrier with respect to a vertical axis (A, $\gamma$, $\delta_2$, $\delta_3$, $\zeta_3$), and wherein a device is provided for determining the position (X, Y) of the probe element from the measured values of the additional rotary encoder and the known distance (1) between the probe element and the rotary axis.

8. The coordinate measuring apparatus of claim 7, characterized in that said linkage arm (28) comprises three links (11, 12, 13) and angle encoders ($\alpha$, $\beta$, $\gamma$) corresponding to respective ones of said links.

9. The coordinate measuring apparatus of claim 7, characterized in that the linkage arm (28) comprises two links (21, 23) and a pull-out arm (26) of varying length ($r_1$) and rotary encoders ($\delta_1$, $\delta_2$) associated to the links and a scale (24) associated to the pull-out arm.

10. The coordinate measuring apparatus of claim 7, characterized in that two linkage arms (33, 48) are provided, each having two links (31, 33; 41, 43) and a pull out arm (36, 46) variable length ($r_2$, $r_3$), each pull out arm being associated with a scale (34, 44) and at least one link being associated with a rotary encoder ($\delta_3$).

11. The coordinate measuring apparatus according to one of claims 7-10, characterized in that one or more linkage arms (58, 113, 123) are connected to the upper end of the displaceable carrier (2, 102).

12. The coordinate measuring apparatus according to claim 11, characterized in that the carrier (103) is freely rotatable around 360° under the link or links.

13. The coordinate measuring apparatus of claim 11, characterized in that one or more of the links are connected to the carrier (103) by means of a rotational joint defining a vertical rotational axis (A), which passes the contact ball ($T_k$) at the outer end of said measuring head being mounted on said carrier, or which axis (A) is in only a small distance to the contact ball ($T_k$).

14. The coordinate measuring apparatus of claim 7, characterized in that the carrier (103) stands on top of a plate (109) of greater dimensions and in that a workpiece table (115) is provided in the displacement space of the carrier, which table rests on a central, narrow foot being configured to allow the plate (109) of the carrier to be moved under said table.

15. The coordinate measuring apparatus of claim 14, characterized in that said fixed reference point being said foot of said table; and, said linkage arm being pivotally connected to said foot.

16. The coordinate measuring apparatus of claim 11, characterized in that the linkage arms (113, 123) are counterbalanced so that the latter apply substantially no weight to the upper end of said carrier (103).

17. The coordinate measuring apparatus of claim 16, characterized in that the linkage arms (113, 123) are connected to two mutually space vertical stands (110, 120) attached to said planar guide (101) and the upper ends of said stands being interconnected by a rigid transverse member (118) being made of a material having a low thermal coefficient of expansion.

18. The coordinate measuring apparatus of claim 17, characterized in that the linkage arms (113, 123) extend outwardly beyond their connecting point (A) at the upper end (108) of the carrier (103).

19. The coordinate measuring apparatus of claim 7, characterized by a first drive for driving said probe in a vertical direction (Z) along carrier (203) and by a second drive for displacing the carrier horizontally.

20. The coordinate measuring apparatus of claim 19, characterized in that said second drive (211) acts on said carrier (203) at the center of gravity of said carrier.

21. The coordinate measuring apparatus of claim 19, characterized in that said second drive is a linear drive (212) between two supports (210, 220) mounted on one side adjacent said measuring region; and carries a further linear drive (211) for engaging and acting in a second direction transverse to the first direction, and further that a rotary table (215) carrying the workpiece to be measured is arranged in the displacement region of the carrier (203).

**Revendications**

1. Procédé pour déterminer les valeurs de coordonnées d'un élément palpeur, selon lequel
   - la position de l'axe de rotation (A) d'un support pour un élément palpeur ($T_k$), support qui peut être translaté horizontalement sur une plaque de base (101), est déterminée par une mesure de longueurs à partir de deux points à distance mutuelle fixe (b,L), ou par une mesure de distance et une mesure d'angle ou plusieurs mesures d'angles à partir d'un point, et la position de rotation ($\delta4$) du support autour de l'axe vertical (A) est déterminée par un capteur d'angle supplémentaire,

- les coordonnées de position planes de l'élément palpeur ($T_k$) sont calculées à partir de la distance connue (1) entre l'axe de rotation (A) et l'élément palpeur ($T_k$) et de la valeur d'angle mesurée ($\delta 4$), et

- la coordonnée de hauteur (Z) de l'élément palpeur ($T_k$), qui peut coulisser verticalement dans le support (103), est déterminée par une échelle graduée (108) du support (103).

2. Procédé selon la revendication 1, caractérisé en ce que l'inclinaison ($\alpha 4$) du support par rapport à la verticale (Z) est déterminée par des dispositifs de mesure supplémentaires, et des secondes valeurs de correction ($X_2, Y_2, Z_1$) sont calculées à partir des valeurs de mesure supplémentaires et de la valeur de hauteur mesurée (Z), et sont respectivement liées aux coordonnées de position mesurées (X,Y) et à la coordonnée de hauteur (Z).

3. Procédé selon la revendication 2, caractérisé en ce que l'inclinaison ($\alpha 4$) est mesurée par des clinomètres électroniques dans le support (103).

4. Procédé selon la revendication 2, caractérisé en ce que l'inclinaison ($\alpha 4$) est mesurée par au moins trois capteurs mutuellement distants ($M_1, M_2, M_3$) dans le pied (109) du support (103), qui mesurent la distance par rapport au guide plan du support.

5. Procédé selon la revendication 4, caractérisé en ce que la topographie du guide plan (101) est enregistrée lors d'un processus de mesure séparé et mémorisée sous la forme d'une matrice de correction bidimensionnelle, et en ce qu'on utilise la matrice de correction et les valeurs de mesure des capteurs ($M_1, M_2, M_3$) pour déterminer l'inclinaison.

6. Procédé selon la revendication 1 ou 2, caractérisé en ce que les coordonnées de position planes (X,Y) sont mesurées à l'aide d'interféromètres laser (415).

7. Appareil de mesure de coordonnées, sur la base d'un support (3,103,203) pouvant être librement translaté dans un plan, qui possède une tête palpeuse verticalement coulissante (7,107) et une échelle graduée (8,108) mesurant la position verticale (Z) de la tête palpeuse, la tête palpeuse (7,107) portant un élément palpeur ($T_k$) sur un doigt palpeur réagissant dans plusieurs directions spatiales, et le support étant relié, par l'intermédiaire d'au moins un bras articulé, à au moins un point de référence fixe (10; 20; 30,40; 50; 110,120; 210,220), le bras articulé possédant plusieurs capteurs de rotation ou échelles graduées mesurant la position du support dans le plan, ainsi qu'un capteur de rotation supplémentaire mesurant la position de rotation du support autour d'un axe vertical (A, $\gamma$, $\delta 2, \delta 3, \sigma 3$), et un dispositif étant prévu, qui détermine la position (X,Y) de l'élément palpeur à partir des valeurs de mesure du capteur de rotation supplémentaire et de la distance connue (1) entre l'élément palpeur et l'axe de rotation.

8. Appareil de mesure de coordonnées selon la revendication 7, caractérisé en ce que le bras articulé (18) comprend trois articulations (11,12,13), auxquelles sont associées des capteurs de rotation ($\alpha, \beta, \gamma$).

9. Appareil de mesure de coordonnées selon la revendication 7, caractérisé en ce que le bras articulé (28) comprend deux articulations (21,23) et un tiroir (26) de longueur variable (r1), des capteurs de rotation ($\delta 1, \delta 2$) étant associés aux articulations et une échelle graduée (24) étant associée au tiroir.

10. Appareil de mesure de coordonnées selon la revendication 7, caractérisé en ce qu'il est prévu deux bras articulés (38,48) comprenant chacun deux articulations (31,33; 41,33) et un tiroir (36,46) de longueur variable (r2,r3), une échelle graduée (34,44) étant associée à chaque tiroir et un capteur de rotation ($\delta 3$) étant associé à au moins une articulation (33).

11. Appareil de mesure de coordonnées selon l'une des revendications 7 à 10, caractérisé en ce que le ou les bras articulés (58,113,123) sont articulés à l'extrémité supérieure du support (2,102) mobile en translation.

12. Appareil de mesure de coordonnées selon la revendication 11, caractérisé en ce que le support (103) peut tourner librement à 360° en dessous du ou des bras articulés.

13. Appareil de mesure de coordonnées selon la revendication 11, caractérisé en ce que le ou les bras articulés sont fixés au support (103) par l'intermédiaire d'une articulation rotative, dont l'axe de rotation vertical (A) passe par la boule palpeuse ($T_k$) de la tête palpeuse fixée à l'appareil de mesure de hauteur, ou se trouve à une faible distance (1) de la boule palpeuse ($T_k$).

14. Appareil de mesure de coordonnées selon la revendication 7, caractérisé en ce que le support (103) repose sur une plaque de base (109) de plus grande superficie de section, et un plateau porte-pièce (115) est prévu dans la plage de translation du support, plateau qui repose sur un mince pied (116) disposé centralement, de telle sorte que la plaque de base (109) du support peut se déplacer en dessous de la surface (115) du plateau.

15. Appareil de mesure de coordonnées selon la revendication 14, caractérisé en ce que le point de référence fixe est le pied du plateau porte-pièce, et le bras articulé est fixé en rotation à ce dernier.

16. Appareil de mesure de coordonnées selon la revendication 11, caractérisé en ce que les bras articulés (113,123) sont équilibrés de telle sorte qu'ils reposent sensiblement librement sur le dessus du support (103).

17. Appareil de mesure de coordonnées selon la revendication 16, caractérisé en ce que les deux bras articulés (113,123) sont fixés à l'aide de deux montants verticaux (110,120) sur le guide plan (101) du support (103), et les montants sont fixés à leurs extrémités supérieures par une barre transversale rigide (118) de faible coefficient de dilatation thermique.

18. Appareil de mesure de coordonnées selon la revendication 17, caractérisé en ce que les bras articulés (113,123) s'étendent au-delà de leur point d'assemblage (A) au dessus (108) du support (103).

19. Appareil de mesure de coordonnées selon la revendication 7, caractérisé en ce qu'il est prévu un premier entraînement pour la translation verticale (z) de la tête palpeuse sur le support (203), et un second entraînement (211) pour la translation horizontale du support.

20. Appareil de mesure de coordonnées selon la revendication 19, caractérisé en ce que le second entraînement (211) agit sur le support (203) à hauteur du centre de gravité de ce dernier.

21. Appareil de mesure de coordonnées selon la revendication 19, caractérisé en ce que le second entraînement est un entraînement linéaire (212), qui est placé entre deux appuis (210,220) sur un côté de la plage de mesure de l'appareil de mesure de coordonnées et qui porte lui-même un autre entraînement linéaire (211) agissant perpendiculairement à l'entraînement (212), et en ce qu'un plateau rotatif (215) pour la pièce à mesurer est disposé dans la plage de translation du support (203).

# Fig.1

Fig.2

# Fig. 3

Fig.4

Fig.6

Fig.5

## Fig. 7

## Fig. 8a

## Fig. 8b

Fig.9a

## Fig. 9b

$x_1, y_1 = F(\delta_4, l)$

$x, y = (r_4, r_5)$

A ~ Pt 112

103 102

108

$z_1 = F(Mi)$ Tk

$x_2, y_2 = F(Mi, z, \delta_4)$

104

z

$\alpha_4$

$M_1$ 109 $M_2$

101

$r_5$ $r_4$ $\delta_4$ z

$M_1$

$M_2$

$M_3$

x

y

z

127

EP 0 342 267 B1

Fig. 10